# EUROPEAN PATENT APPLICATION

(11) **EP 1 887 274 A1**
(43) Date of publication of application: **13.02.2008**
(21) Application number: 05754005.6
(22) Date of filing: 03.06.2005
(51) Int. Cl.: F16M 11/12, F16M 11/18

(54) **FILM CAMERA HEAD**

(71) Applicant: Vallés Navarro, Andrés, 08902 L'Hospitalet de Llobregat (ES); Vallés Navarro, Alfredo, 08902 L'Hospitalet de Llobregat (ES)
(72) Inventor: Vallés Navarro, Andrés, 08902 L'Hospitalet de Llobregat (ES); Vallés Navarro, Alfredo, 08902 L'Hospitalet de Llobregat (ES)
(74) Representative: Canela Giménez, Teresa
(86) International application number: PCT/ES2005/000316
(87) International publication number: WO 2006/131571

(57) **Abstract**

**HEAD FOR FILM CAMERAS,** of the type that comprises a supporting frame with means for automated and remotely controlled movement about three orthogonal axles aa', bb', cc', said head (1) frames comprising two "U"'s, one of them being secondary (2) and rotating about the TILT axle bb', and the other being a main "U" (3) and rotating about the PAN axle aa', said "U" facing one another and being articulatedly joined, the base of said secondary "U" (2) having a swinging crosspiece (4) that on its inner face supports a curve guide (6) for fixing and supporting that film camera, which curve guide (6) provides rotation along the ROLL axle cc', said head (1) being joined to its support (5) with resilient damping means against undesirable movements and vibrations of said support (5) and in addition to the known movement axles, namely, PAN aa', TILT bb' and ROLL cc', said head (1) is provided with an independent correcting axle dd' having means for performing a correcting movement in the opposite direction to the undesirable movements of the PAN axle aa'.

## Description

### FIELD OF THE INVENTION

The present invention discloses a camera head for filming of the type that permits freedom of movement of same about three orthogonal axles, with the distinctive feature that it incorporates damping means against the vibrations to which said head may be subject, said head having a control for additional movement that is independent of the head for correction of undesirable movements.

### PRIOR ART

It is known in the art related to this field of business that there exist three possible film camera movements in relation to the three orthogonal axles that comprise our field of view.

In the first place, PAN movements (panoramic) occur when the camera is horizontally displaced, this resulting in a movement either to the right or to the left relative to the shooting frame.

TILT movements are equivalent to vertical displacements of the shooting that result in upward and downward movements of the image with respect to the horizon.

Lastly, ROLL movements are the rotation of the camera about itself and are equivalent to the rotation of the image on the screen about the centre thereof.

Manufacturers of supports for film cameras have offered different solutions intended to isolate and control whichever of the above-described three movements with respect to the other two so as to provide suitable ease of use and remote control of the camera for achieving stability of the images that are being shot.

Patent US3788585 to A. Masserson describes a stabilizer apparatus for multi-directional movement of a camera that includes the above-described TILT-PAN-ROLL sequence of movements. The changes of position of the horizon caused by the TILT of the boom that supports the film camera are corrected by means of a correcting TILT movement that restores the horizon.

The problem of the type of devices such as the one described above is that they are quite rigid and on account of their weight have elevated inertia, thereby making it fruitless the task of trying to provide the stability that is nowadays demanded from film cameras. Moreover, they suffer the consequences of the vibrations to which the support of the assembly is subjected, which in turn causes instability while filming.

Filming instability arises, on other occasions, either from the very movement of the camera, which is supported on means that are in motion, such as, in travelling shots, in car scenes, in helicopter scenes, etc, with the ensuing changes and variations in the vertical inclination and in the lateral angle of the filming, or also from the movement of the object that is being filmed, the result of this all being erratic and brusque movements of the shooting frame, shaking, etc.

In order to correct said problems there have been created compensating mechanisms and supports that properly isolate any type of movement to facilitate its automated control.

Spanish patent ES2122840 discloses some improvements in supporting frames for swinging, rotating, ascending and descending supports, at will, by remote control, intended for supporting optical cameras.

Said frames are made up of light sections determined by two spaced apart parallel tubes that are fixed together by means of rigid bridles whose ends terminate in respective jaws that are opposed and joined together by setscrews; to said tubes another pair of parallel tubes is joined, into the ends of which are inserted ringlets whose edges are provided with articulated modules that are part both of the head and the pivoting tray that supports the film camera.

Spanish utility model ES1046130U describes an improved supporting frame for remotely controlled satellite cameras. Its purpose is to provide a lighter, more reliable and more stable support for film cameras by enhancing sensibility of response to the rotation orders received from the control means during the PAN, TILT and ROLL movements.

To that end, it is provided a seat on which the film camera is placed. Said seat is fitted between two crosspieces and respective laminated straps that join them together. The parallel bars that constitute the back of said seat are in turn attached to the base of the frame's upper "U", which is articulatedly joined by the ends of its lateral arms to the ends of the lateral arms of the lower portion of the frame.

In the above two developments, it is generally safe to claim that thanks to incorporating the ROLL mechanism within the TILT mechanism, that is to say, thanks to performing the PAN-TILT-ROLL sequence, the ROLL is not only used for controlling the horizon in order to keep filming levelled, but it is also possible to perform an independent ROLL-type movement.

Despite the efficiency of the above-described system, the growing mechanization of remotely controlled film cameras along with the urge for improving filming stability in increasingly extreme situations are leading to seek improvements in the known art in order to enhance filming stability and to provide greater stability in the use of cameras.

The high inertia of the frames of the known art may cause camera movements to be accompanied by jerky movements that may produce vibrations. These vibrations are corrected by supressing the sensibility of the electronics that control the movements on the respective axle, this resulting in a loss of accuracy.

Finally, the very inertia and thrusting of the camera supports cause the maladjustment of the electronic system that controls the movement on each axle after a break or a long period of non-use, making it necessary to recalibrate said system before using the camera again. It is to be noted that even the slightest delays in the calibration of compensating mechanisms for cameras and, in general, getting said camera ready for use, represent elevated costs in an industry like the film-making industry, which gets many professionals and specialists on the move during the process of filming.

That is why it becomes so important to obtain efficient damping of the heads for film cameras against both the vibrations suffered by the support and likely shocks and lateral jerky movements received by the PAN axle, by facilitating electronic control of the head movements.

The present invention in intended to correct these problems by providing a more stable supporting head for film cameras that has different correcting means of the undesirable movements of the head. Moreover, there is provided damping means that reduce the effect of the vibrations that the support of said head may suffer.

### DESCRIPTION OF THE INVENTION

The present invention discloses a stabilized head for film cameras that comprises a frame provided with damping means for the joining of said head to its support through a progressive inertia-reducing unit, so that a distribution connecting rod progressively reduces the impact resulting from the movement of the film camera.

All the above is combined with a damping means provided with resilient springs for isolating the head from external vibrations.

Additionally, it has been developed an independent movement for correction of the undesirable movements of the head. The PAN control supports the TILT control axle, which in turn supports a correction axle. It is this correction axle the one that supports the ROLL movement control.

The most direct result of said independent correction of undesirable head movements is that the correction of the vibrations does not affect panoramic movement. Within the PAN movement itself, the PAN axle carries out the panoramic movement and the correcting axle corrects vibrations and possible jerky movements by means of a horizontal movement in the opposite direction. In this way, when the PAN axle is shaken, the correcting axle absorbs said movement, which then affects to a lesser degree the stability of the film camera.

Another advantage of this correcting axle results from an exchange of functions between the ROLL and said correcting axle, which makes it possible that there is always one of the them working as the corrector and the leveller of the horizon, whereas the other works as a corrector of the PAN undesirable movements; and it even permits that both work jointly for performing any suitable corrections.

In the previous art, the known ROLL acts as a leveller of the horizon, but depending on the position of the TILT, for instance when the camera is in a zenithal plane, that is, perpendicular to the PAN axle, said ROLL axle ends up parallel to the PAN axle and acts as a second PAN, although it is then rendered useless as a horizon leveller.

Thanks to the present invention and the correcting movement on the PAN axle, in the above situation in which the camera is in a zenithal plane, it is said correcting axle the one that acts as a leveller of the horizon by replacing the ROLL.

### BRIEF EXPLANATION OF THE DRAWINGS

For a better interpretation of the object of the present invention, it is described below a merely illustrative and non-limiting embodiment that is accompanied by a set drawings in which:
Figure 1 is a perspective view of a frame for film cameras in accordance with the present invention, in which the secondary "U" that is articulatedly joined to the main "U" is showed in an intermediate position in order to show the three movement axles of the head, PAN, TILT and ROLL.
Figure 2 shows the head of the previous figure with the secondary "U" in the same plane as the main "U".
Figure 3, 4 and 5 show respective sectional views from axle aa' of figures 1 and 2 so as to permit a suitable representation of the damping device of the PAN axle.

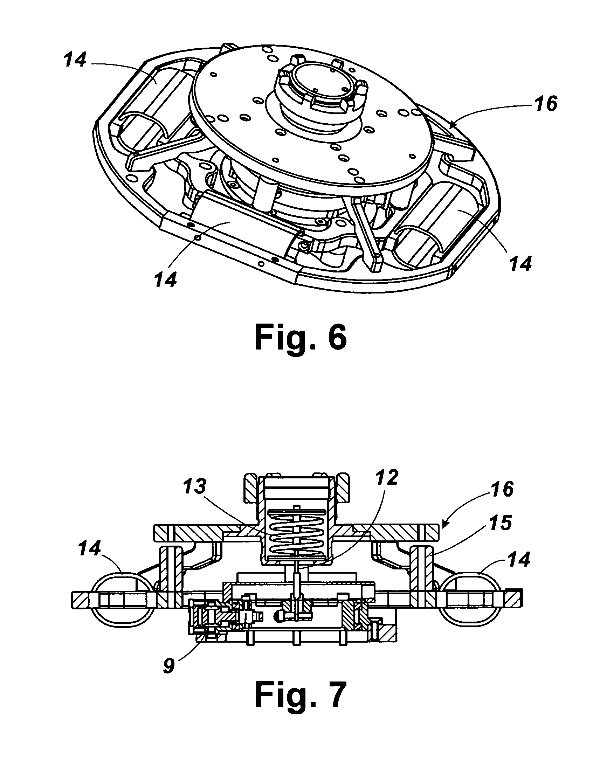

Figure 6 is a perspective view of the joining body of the head of the invention with its support and its damping elements.
Figure 7 is a section of the previous figure.

### DETAILED EXPLANATION OF THE INVENTION

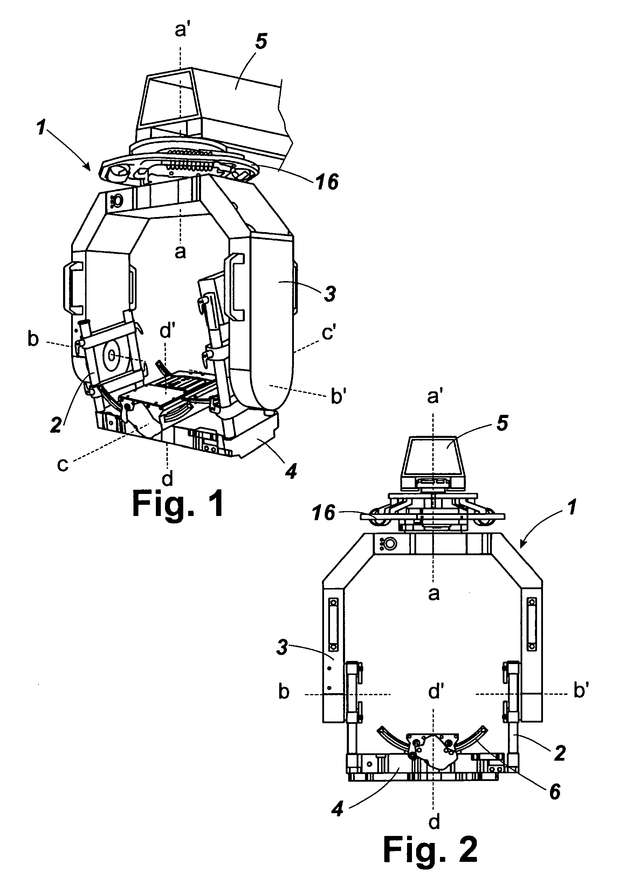

The invention consists of a head for film cameras of the type formed by an articulated double "U" frame (2 and 3), having means for automated and remotely controlled rotation about three orthogonal axles aa', bb', cc'(figures 1 and 2).

The head (1) comprises two "U"'s, one of them being a secondary "U" (2) and rotating about the TILT axle (bb') and the other one being a main "U" (3) and rotating about the PAN axle (aa'). Both "U"'s face one another and are articulatedly joined and the base of said secondary "U" (2) is provided with a swinging crosspiece (4) that in its inner face has a curve guide (6) for supporting the film camera that rotates about the ROLL axle (cc').

This type of head consisting of an articulated double "U" support (2 and 3) is particularly advantageous with respect to the "L"-shaped articulated arms that have a single articulation point for each axle because it permits an optimal support of the camera, which is better balanced since it has two articulations for rotation.

In the present invention this performance is even further improved because TILT movement control is performed through two independent mechanisms, one for each articulation, said mechanisms being provided with respective motors.

Furthermore, the joining of the head (1) with its support (5), for instance a film crane, is carried out by means of an antivibration damping device.

The device for joining the head (1) to its support (5) is formed by a rigid body (16) integral with the support (5) and joined to the head (1) by means of resilient strips (14). Additionally, there exists a cable (12) that is pulled taut by a resilient spring (13) that vertically supports the head (1).

The combination of both types of resilient braking, the braking provided by the cable (12) and its spring (13), and the one provided by the strips (14), account for a quick damping of the vibrations received by the support (5).

There exist in a preferred embodiment of the invention separators (15) that limit or prevent the oscillation of the rigid body (16) by limiting or blocking the damping mechanism.

The main "U" (3) is articulatedly joined to the head support (5), said joining having and additional damping means of the PAN movements thanks to a "T"-shaped connecting rod (7) that joins both rotation bodies, the one corresponding to the support of the camera of the rigid body (16) and the one corresponding to the head (1), whose end (8) actuates against a damping chamber (9) that is provided with damping means such as resilient bands (17), thereby reinforcing the stability of the film camera PAN movements.

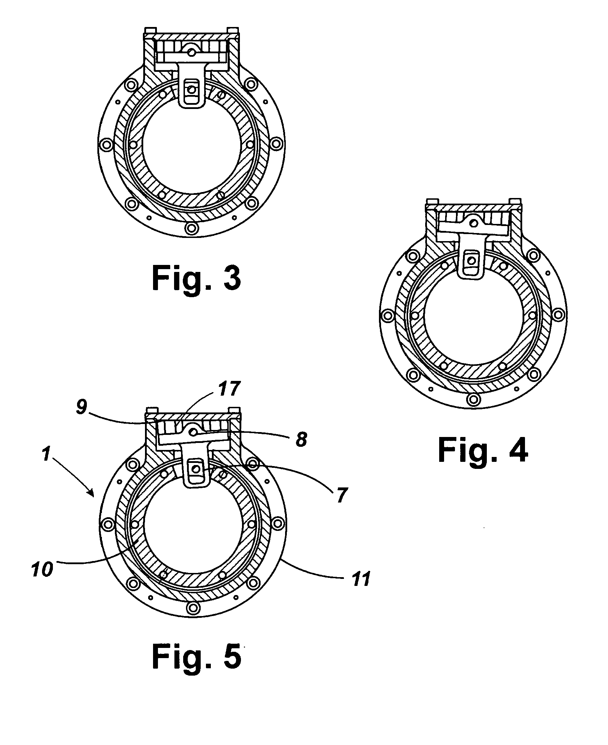

The joining of the body (16) to the main "U" (3) is made, as shown in figure 5, in such a way that the frame (11), integral with said body (16), is linked to the PAN axle (10) through a connecting rod (8), whose oscillating movement is damped by bands (17) that actuate in a damping chamber (9).

The ram blows from the PAN movements are therefore absorbed by the oscillating movement of the PAN axle (10) and damped by the bands (17) of the damping chamber (9).

Simultaneously, owing to said damping, the electronics of the system does not become affected, no correcting inverse movement occurs and there is no feeling that the chamber vibrates either. Hence, it is unnecessary, like in the prior art, to reduce the sensibility of the axle with the ensuing loss of accuracy in the control of the film camera.

With the embodiment of the present invention it is achieved an improvement of the stability of the head (1) against the vibrations received by the support or platform (5) where the head for film cameras is located. High frequency or intensity vibrations, thanks to the damping mechanism of the invention, become reduced and transformed into low frequency vibrations, thereby subsequent electronic correcting task of said vibrations being facilitated.

The head of the invention further incorporates a correcting axle dd' for the undesirable movements in respect of PAN axle aa', which axle performs a movement in the opposite direction to any PAN movement that may be wished to be corrected. To that end, there are provided means for detection of the undesirable movements, such as properly calibrated sensors that generate by means of both suitable electronic means and a motor, a correcting movement in the opposite direction.

In the preferred embodiment of the invention, the PAN aa' control supports the TILT bb' control axle, which in turn supports the correction axle dd', this correction axle dd' being the one that supports the control of the ROLL cc' movement.

Said independent movement, which stabilizes the PAN, has been located in the secondary "U" (2), which in turn supports the ROLL for the sake of simplicity in design and also because it allows, when the camera is in the zenithal position, said stabilizing movement, operating as ROLL, to level the horizon as well, whereas the ROLL, which in this situation is in a parallel plane to the PAN, operates as a correcting PAN.

This relative arrangement of the axles permits the existence both of an independent correcting movement of the PAN axle and a ROLL-type levelling movement of the horizon, regardless of the position of the camera, both in a front plane and when the camera is filming a zenithal plane.

In a flat position there is a PAN correcting movement and a levelling ROLL of the horizon. In the zenithal position of the camera functions get inverted and it is the ROLL cc' the one that carries out the correction of the correcting PAN and the correction axle dd' the one that carries out the levelling function of the horizon.

Movement adjustment takes place through electronic means that permit resilient calibration of the different parameters.

It is understood that in the present case any changes regarding details of construction may be resorted to provided they do not alter or modify the gist of the invention.

## Claims

1. **HEAD FOR FILM CAMERAS,** of the type that comprises a supporting frame with means for automated and remotely controlled movement about three orthogonal axles aa', bb', cc', said head (1) frames comprising two "U"'s, one of them being secondary (2) and rotating about the TILT axle bb', and the other being a main "U" (3) and rotating about the PAN axle aa', said "U"'s facing one another and being articulatedly joined, the base of said secondary "U" (2) having a swinging crosspiece (4) that on its inner face supports a curve guide (6) for fixing and supporting the film camera, which curve guide (6) provides rotation along the ROLL axle cc', **CHARACTERIZED in that** said head (1) is joined to its support (5) through resilient damping means against undesirable movements and vibrations of said support (5); and **in that** in addition to the known movement axles, namely, PAN aa', TILT bb' and ROLL cc', said head (1) is provided with an independent correcting axle dd' having means for performing a correcting movement in the opposite direction to the undesirable movements of the PAN axle aa'.

2. **HEAD FOR FILM CAMERAS,** according to claim 1, **CHARACTERIZED in that** said axle dd' that corrects the PAN movement of said head (1) is located on said swinging crosspiece (4), thereby supporting the ROLL axle cc'.

3. **HEAD FOR FILM CAMERAS**, according to the previous claims, **CHARACTERIZED in that** said resilient damping means comprise a body (16) to which said support of the head for filming is joined, said body (16) being joined to the head (1) by means of resilient strips (14) and a cable (12) that is linked to a resilient spring (13).

4. **HEAD FOR FILM CAMERAS,** according to the previous claims, **CHARACTERIZED in that** joining of said body (16) to the PAN axle (10) is oscillating and damped, and it is made through a connecting rod (7) whose movement has to overcome the resistance of a resilient means, such as bands (17), in a damping chamber (9).

5. **HEAD FOR FILM CAMERAS,** according to the previous claims, **CHARACTERIZED in that** there exist two independent actuating and controlling mechanisms that receive the rotation from each one of the TILT axle bb' articulations.

6. **HEAD FOR FILM CAMERAS**, according to the previous claims, **CHARACTERIZED in that** separators (15) have been located in said damping mechanism for preventing excessive oscillation of said rigid body (16) of said resilient damping means against the undesirable movements and vibrations of said film camera support.

7. **HEAD FOR FILM CAMERAS CHARACTERIZED in that** the ROLL cc' control axle and the independent correcting axle dd' can exchange functions, depending on the working plane of the film camera, so that there exists at least one ROLL leveler of the horizon and one independent correcting axle of the PAN undesirable movements.

8. **CORRECTING SYSTEM FOR HEADS FOR FILM CAMERAS CHARACTERIZED in that** it comprises mechanical means for the head (1) against the vibrations of its support (5), damping means for the movement of the PAN axle aa', and an independent correcting axle dd' for camera movement against the undesirable movements from the PAN dd'.

9. **CORRECTING SYSTEM FOR HEADS FOR FILM CAMERAS,** according to claim 8, **CHARACTERIZED in that** said independent correcting axle dd' is located in the TILT mechanism, which in turn is located on the PAN mechanism, and said correcting axle dd' supports, in turn, the leveling ROLL mechanism of the horizon.

10. **CORRECTING SYSTEM FOR HEADS FOR FILM CAMERAS,** according to claims 8 and 9, **CHARACTERIZED in that** functions are exchangeable depending on the working plane of the film camera, between said independent correcting axle dd' and said ROLL cc' axle, so as to level the horizon or correct any undesirable PAN movements; thereby performing the following control sequence of the film camera movements: PAN-TILT-correction PAN-leveling ROLL or PAN-TILT-leveling ROLL-correction PAN.
